# EUROPEAN PATENT APPLICATION

(11) **EP 2 444 834 A1**
(43) Date of publication of application: **25.04.2012**
(21) Application number: 10251810.7
(22) Date of filing: 19.10.2010
(51) Int. Cl.: G02B 23/12, G02B 27/01, G02B 27/14, G02B 6/00

(54) **Image combiner**

(71) Applicant: BAE SYSTEMS PLC, London SW1 5AD (GB)
(72) Inventor: The designation of the inventor has not yet been filed
(74) Representative: BAE SYSTEMS plc Group IP Department

(57) **Abstract**

An image combiner for a viewing device, such as a night vision device, is disclosed. The combiner is arranged to combining a first image, such as generated symbology, with a second image, such as a view of an outside scene in reduced lighting conditions. The image combiner comprises a waveguide comprising means for capturing the first image from a first viewing direction and means for directing the first image in a second viewing direction, the second viewing direction being substantially coincident with a viewing direction of the second image, such that the first image can combine with the second image. At least a portion of the waveguide is arranged to substantially transmit the second image, such that the second image can pass substantially through the waveguide.

## Description

The present invention relates to an image combiner and particularly, but not exclusively to an image combiner for night vision apparatus.

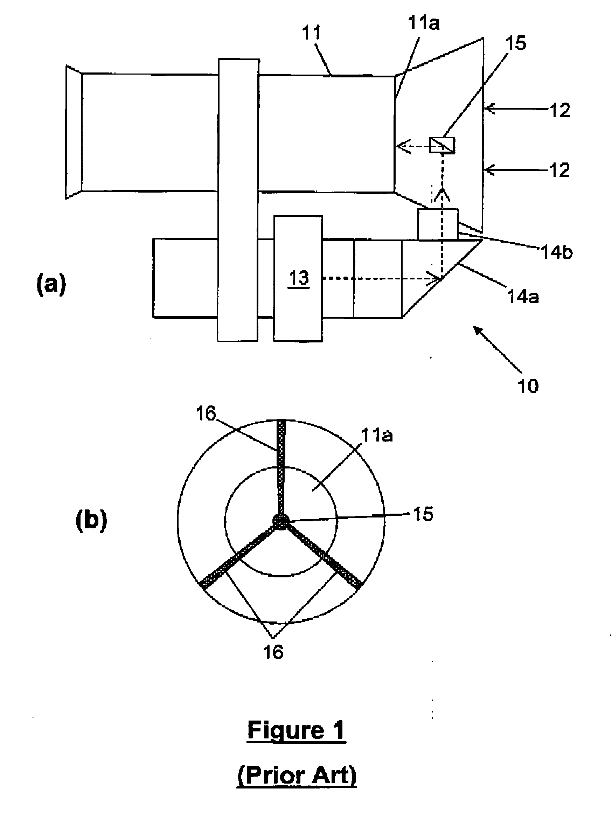

US 5,052,455 discloses apparatus for superimposing symbology upon a dimly lit view of an outside scene using a night vision device. The night vision device disclosed in US 5,052, 455 is illustrated schematically in figure 1 of the drawings. Referring to figure 1 a of the drawings, the night vision device 10 comprises an ocular 11 having an optical aperture 11a which is arranged to receive light from the outside scene in the direction of the arrows indicated by the numeral 12. The device 10 is further arranged to receive symbology generated in a Cathode Ray Tube 13, via a mirror and lens arrangement 14a, 14b, and a reflecting prism 15, the latter of which is mounted substantially in front of the aperture 11a. The reflecting prism 15 is held in palace by a series of support arms 16, as illustrated in figure 1b of the drawings, which in combination with the prism 15 obscure the entrance to the device 10.

In reduced lighting condition, only a small amount of light will enter the ocular 11. The obstruction created by the prism 15 and support arms 16 further reduces the light from the outside scene entering the ocular 11. Accordingly, upon entering the ocular 11, the light is subject to intensification using an intensifier (not shown). However, since the scene image is combined with a relatively brighter symbology image, the luminance of the symbology image must be diminished to prevent damaging the intensifier and to prevent the symbology image obscuring the scene image. The obstruction caused by the prism 15 and support arms 16 requires the use of a small prism. However, a small prism 15 is found to limit the angular range or the field of view of the symbology which is visible to the user.

We have now devised an image combiner which alleviates the above-mentioned problems.

According to a first aspect of the present invention there is provided an image combiner for combining a first image with a second image, the combiner comprising a waveguide comprising means for capturing the first image from a first viewing direction and means for directing the first image in a second viewing direction, the second viewing direction being substantially coincident with a viewing direction of the second image, such that the first image can overlay the second image, wherein at least a portion of the waveguide is arranged to substantially transmit the second image, such that the second image can pass substantially through the waveguide.

The waveguide thus prevents minimal obstruction to radiation from an outside scene for example, since the waveguide is substantially transparent to radiation from the outside scene.

The means for capturing the first image is preferably disposed at a first position on the waveguide and the means for directing the first image is preferably disposed at a second position on the waveguide. The first position is preferably displaced along the waveguide with respect to the second position.

Preferably, the second position comprises a distributed position, such that the means for directing the first image is arranged to extend along the waveguide. In this respect, the first image is directed from the waveguide at a distributed position so that the image is visible to the user over a wide angular range, namely a wide field of view.

Preferably, at least the second position of the waveguide is arranged to substantially transmit the second image, such that the second image can pass substantially through the waveguide at the second position.

Preferably, the means for capturing and directing the first image comprises a first and second diffraction grating, respectively..

The first image preferably comprises generated symbology. Preferably, the first image is generated using an image projector, such as a miniature cathode ray tube or a digital micro-display projector. The second image preferably comprises a view of an outside scene in reduced lighting conditions, such as an outside scene at night. In this respect, the image combiner is arranged to superimpose the generated symbology on the view of the outside scene.

The image combiner preferably further comprises, a lens arrangement for manipulating the combined first and second image. The lens arrangement preferably comprises an inlet aperture for receiving the first and second images into the arrangement and the second grating is preferably arranged to extend substantially across the inlet aperture.

Preferably, the first image comprises radiation having a wavelength in a first wavelength range and the second image comprises radiation having a wavelength in a second wavelength range. The first and second wavelength ranges preferably comprise separated wavelength ranges. The first image, namely the symbology, is typically generated using green light having a wavelength in the range of 515nm to 545nm and preferably substantially 530nm. The second image, namely the view of the outside scene, comprises substantially infra-red wavelengths in the range 600nm to 900nm.

The first wavelength range is preferably characteristic of green light and the second wavelength range is preferably characteristic of near infra-red radiation.

Preferably, the first and second diffraction gratings are arranged to substantially diffract radiation in the first wavelength range and substantially transmit radiation in the second wavelength range, respectively.

The waveguide preferably comprises a substantially planar waveguide. Preferably, the waveguide is arranged to guide the first image from the first position to the second position via total internal reflection.

According to a second embodiment of the present invention there is provided a viewing device for viewing in reduced lighting conditions, the viewing device comprising a housing for housing a lens arrangement, the housing comprising an inlet aperture for receiving a first and second image into the lens arrangement and an outlet for viewing the first image combined with the second image, the device further comprising an image combiner for combining the first image with the second image, the combiner comprising a waveguide comprising means for capturing the first image from a first viewing direction and means for directing the first image in a second viewing direction, the second viewing direction being substantially coincident with a viewing direction of the second image, such that the first image can overlay the second image, wherein the waveguide is arranged to substantially transmit the second image, such that the second image can pass substantially through the waveguide.

Preferably, the means disposed at the second position is arranged to extend substantially across the inlet aperture to the lens arrangement.

The viewing device preferably further comprises an image intensifier for intensifying the combined image.

Preferably, the first image comprises generated symbology and the second image comprises a view of an outside scene in reduced lighting conditions, such that the viewing device is arranged to present a combined first and second image to a user.

Preferred features of the optical arrangement may comprise one or more of the preferred features of the image combiner of the first aspect.

An embodiment of the present invention will now be described by way of example only and with reference to the accompanying drawings, in which:
Figure 1a is a schematic side view illustration of a prior art night vision device;
Figure 1b is a view of the inlet aperture to the night vision device of figure 1a, in the direction of arrow A;
Figure 2 is a schematic illustration of a sectional view along a viewing device comprising an image combiner according to an embodiment of the present invention; and,

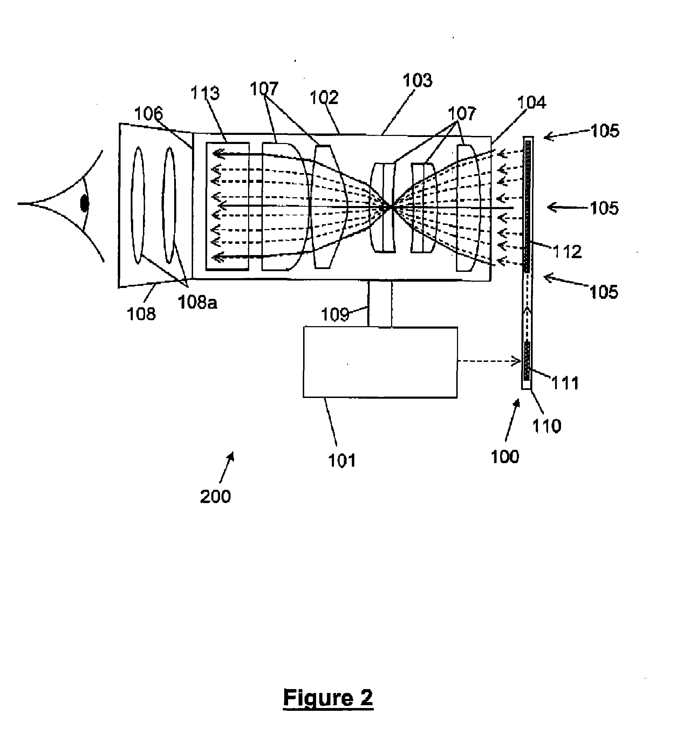

Referring to figure 2 of the drawings, there is illustrated a sectional view of an image combiner 100 according to an embodiment of the present invention, incorporated within a viewing device 200 according to an embodiment of the present invention. The combiner 100 comprises a collimating image projector 101 for generating symbology (as illustrated with the dashed lines) to be overlayed upon a view of an outside world scene (as illustrated with the solid lines) which may comprise a static image or a dynamic image. The combined image is viewed via a viewing element 102 of the viewing device 200, which may comprise a night vision device, for example.

The viewing element 102, which may comprise an ANVIS, AN/VIS-9 or similar, comprises a housing 103 having an inlet 104 for receiving radiation from the outside world scene into the housing in the direction indicated by arrow 105, and an outlet 106 through which radiation can exit the housing 103 to be viewed by a user (not shown), The housing 103 further comprises an objective lens arrangement 107 disposed between the inlet 104 and the outlet 106 for manipulating the radiation which passes through the housing 103 between the inlet 104 and the outlet 106. The viewing element 102 further comprises an eyepiece 108 comprising an eyepiece lens arrangement 108a for focussing the combined image for viewing by the user (not shown), for example.

The projector 101 is rigidly coupled to the viewing element 102 via a clamp 109 or similar, such that a longitudinal axis of the projector and a longitudinal axis of the viewing element 102 are substantially parallel. The image generated by the projector 101 is directed into the viewing element 102 via a planar waveguide 110, which may comprise a high index optical glass, such as the Schott N-SF6 glass. The waveguide 110 is orientated substantially transverse to the longitudinal axis of the projector 101 and viewing element 102 extends from a position which is substantially in front of the inlet 104 to the viewing element 102, to a position substantially in front of the projector 101 for receiving the projector image. The portion of the waveguide disposed adjacent the projector 101 comprises a first diffraction grating 111 which may be disposed upon the waveguide 110 or formed integrally therewith. The first grating 111 may comprise a region of the waveguide 110 having a periodic variation in refractive index or a blazed grating for example, and is arranged to couple the image radiation from the projector 101 with the waveguide 110, so that the image can pass along the waveguide 110 via total internal reflection at the surface thereof, to a position disposed adjacent the inlet 104 to the viewing element 102.

The portion of the waveguide 110 disposed adjacent the inlet 104 comprises a second diffraction grating 112 having a lower diffraction efficiency than the first grating 111, such that a small portion of the image bearing radiation from the projector 101 becomes diffracted out from the waveguide 110 toward the inlet 104 of the viewing element 102. The reduced efficiency of the second diffraction grating compared with the first grating, serves to limit the amount of light from the projector 101 which becomes directed into the viewing element 102, so that the light from the projector 101 does not obscure the view of the outside scene. The second grating 112 may similarly comprise a region of the waveguide 110 having a periodic variation in refractive index or a blazed grating for example, and extends substantially across the diameter of the inlet 104 to the viewing element 102, so that the remainder of the image bearing radiation can continue along the waveguide 110 and enter the viewing element 102 from all positions across the inlet 104. Accordingly, the image from the projector 101 becomes directed into the inlet 104 of the viewing element 102 from a distributed position across the inlet 104, thereby stimulating the viewing element 102 across the entire field of view.

The radiation generated by the projector 101 is arranged to comprise wavelengths characteristic of green light, such as 530nm±15nm. This is because the light from the outside scene, particularly at night, will comprise radiation having a wavelength characteristic of the near infra-red region of the spectrum, typically 600nm to 900nm. The first and second grating 111, 112 are arranged to diffract radiation having a wavelength in the green region of the spectrum and as such comprise a periodic variation in refractive index, whereby the repeat distance, namely the pitch is substantially 400nm. The first and second gratings are thus largely insensitive to radiation having a longer wavelength, such as in the near infra-red region of the spectrum. Accordingly, the second grating 112 is substantially transmissive to radiation from the outside scene and therefore presents minimal obstruction to radiation entering the viewing element 102 through the inlet 104 from the outside scene.

Since the radiation from the outside scene which enters the viewing element 102 will typically comprise a low luminance, the housing 103 may further comprise a image intensifier tube 113, which intensifies the radiation entering the housing 103 so that the view of the outside scene is more discernable to the user (not shown).

From the foregoing therefore it is evident that the image combiner and viewing device provide for an improved view of a scene in reduced lighting conditions, by minimising obstruction of the optical inlet to the device, while also enabling symbology to be superimposed on the view of the scene.

## Claims

1. An image combiner for combining a first image with a second image, the combiner comprising a waveguide comprising means for capturing the first image from a first viewing direction and means for directing the first image in a second viewing direction, the second viewing direction being substantially coincident with a viewing direction of the second image, such that the first image can overlay the second image, wherein at least a portion of the waveguide is arranged to substantially transmit the second image, such that the second image can pass substantially through the waveguide.

2. A combiner according to claim 1, wherein the means for capturing the first image is disposed at a first position on the waveguide and the means for directing the first image is disposed at a second position on the waveguide.

3. A combiner according to claim 2, wherein the first position is displaced along the waveguide with respect to the second position.

4. A combiner according to claim 1 or 2, wherein the second position comprises a distributed position, such that the means for directing the first image is arranged to extend along the waveguide.

5. A combiner according to any of claims 2 to 4, wherein at least the second position of the waveguide is arranged to substantially transmit the second image, such that the second image can pass substantially through the waveguide at the second position.

6. A combiner according to any preceding claim, wherein the means for capturing and directing the first image comprises a first and second diffraction grating, respectively.

7. A combiner according to any preceding claim, wherein the first image comprises generated symbology.

8. A combiner according to any preceding claim, wherein the first image is generated using an image projector.

9. A combiner according to any preceding claim, wherein the second image comprises a view of an outside scene in reduced lighting conditions.

10. A combiner according to any preceding claim, further comprising a lens arrangement for manipulating the combined first and second image.

11. A combiner according to claim 10, wherein the lens arrangement comprises an inlet aperture for receiving the first and second images into the arrangement and the directing means is arranged to extend substantially across the inlet aperture.

12. A combiner according to any preceding claim, wherein the first image comprises radiation having a wavelength in a first wavelength range and the second image comprises radiation having a wavelength in a second wavelength range.

13. A combiner according to claim 12, wherein the first and second wavelength ranges comprise separated wavelength ranges.

14. A combiner according to claim 12 or 13, wherein the means for capturing and directing the first image are arranged to substantially reflect radiation in the first wavelength range and substantially transmit radiation in the second wavelength range, respectively.

15. A viewing device for viewing in reduced lighting conditions, the viewing device comprising a housing for housing a lens arrangement, the housing comprising an inlet aperture for receiving a first and second image into the lens arrangement and an outlet for viewing the first image combined with the second image, the device further comprising an image combiner for combining the first image with the second image, the combiner comprising a waveguide comprising means for capturing the first image from a first viewing direction and means for directing the first image in a second viewing direction, the second viewing direction being substantially coincident with a viewing direction of the second image, such that the first image can overlay the second image, wherein at least a portion of the waveguide is arranged to substantially transmit the second image, such that the second image can pass substantially through the waveguide.
